Europäisches Patentamt

European Patent Office

Office européen des brevets

(11) Veröffentlichungsnummer : **0 004 537**
**B1**

(12) # EUROPÄISCHE PATENTSCHRIFT

(45) Veröffentlichungstag der Patentschrift :
21.07.82

(51) Int. Cl.³ : **C 08 J  3/06//** D21H3/38

(21) Anmeldenummer : 79100237.1

(22) Anmeldetag : 29.01.79
Die Akte enthält technische Angaben, die nach dem
Eingang der Anmeldung eingereicht wurden und die
nicht in dieser Patentschrift enthalten sind.

(54) Verfahren zur Herstellung wässriger Polymerisatsuspensionen.

(30) Priorität : 10.04.78 DE 2815506

(43) Veröffentlichungstag der Anmeldung :
17.10.79 (Patentblatt 79/21)

(45) Bekanntmachung des Hinweises auf die Patenterteilung : 21.07.82 Patentblatt 82/29

(84) Benannte Vertragsstaaten :
BE FR GB IT NL SE

(56) Entgegenhaltungen :
DE - A - 1 956 357
FR - A - 883 939
GB - A - 926 409
US - A - 3 234 161

CHEMICAL ABSTRACTS, Vol. 87, Nr. 4, Juli 25.,
1977, Columbus, Ohio, USA, HIGASHIYAMA,
AKIRA et al. : « Granular compositions of polyacrylamide », Seite 49, rechte Spalte, Zusammenfassung Nr. 24410f

(73) Patentinhaber : Röhm GmbH
Kirschenallee Postfach 4242
D-6100 Darmstadt 1 (DE)

(72) Erfinder : Neumann, Helmut
D-6086 Riedstadt 1
Henesgraben 3 (DE)
Erfinder : Munzer, Manfred, Dr.
Hunsrückstrasse 15
D-6140 Bensheim (DE)
Erfinder : Ringenberg, Werner
Hahlgartenstrasse 1.
D-6108 Weiterstadt 1 (DE)

## Verfahren zur Herstellung wäßriger Polymerisatsuspensionen

Die Erfindung betrifft ein verbessertes Verfahren zur Herstellung von wäßrigen Suspensionen thermoplastischer Perlpolymerisate.

Als Bindemittel, Klebstoffe oder Heißsiegelkleber werden häufig thermoplastische Polymerisate eingesetzt. Sie werden mit den zu bindenden oder zu verklebenden Substraten unter Druck über ihre Glastemperatur erwärmt, wobei das Polymerisat verformt wird und einen innigem Kontakt mit dem Substrat eingeht.

Aus den DT-PS 2 121 593 und 2 135 828 ist es bekannt, Perlpolymerisate mit einer Glastemperatur unter 35° für die genannten Zwecke in Form einer wäßrigen Suspension einzusetzen. In trockener Form verkleben derartige Polymerisatperlen bereits bei Raumtemperatur und sind darum nur als wäßrige Suspension lagerfähig. Die Suspensionen mit z.B. 50 bis 70 Gew.-% Trockengehalt sind wenigstens nach dem Aufrühren flüssig bis pastenartig und können z.B. zur Verwendung als Klebmittel auf ein Substrat aufgestrichen oder aufgerakelt werden. Sie werden in Flüssigkeitsbehältern transportiert und gelagert. Dabei wird das Gewicht des als Suspensionsmedium dienenden Wassers als unvermeidbarer Nachteil in Kauf genommen.

Perlpolymerisate mit einer Glastemperatur über 60 °C können im allgemeinen als trockenes Polymerisat in Säcken oder als Schüttgut gelagert werden, ohne daß sie bei erhöhter Lagertemperatur oder unter der Last des Eigengewichts eines hohen Materialstapels verkleben.

Dagegen bereitet die Lagerung von Perlpolymerisaten mit einer Glastemperatur zwischen 30 und 60 °C Schwierigkeiten. Schon bei ihrer Herstellung tritt das Problem auf, daß sie sehr schonend bei Raumtemperatur getrocknet werden müssen, weil sie bei erhöhter Temperatur zusammenkleben würden. Nach dem Trocknen können sie zwar ebenfalls ohne Verkleben gelagert werden, wenn Lagertemperaturen über 25 °C sicher ausgeschlossen und ein hoher Druck des Schüttgutes vermieden wird. Diese Voraussetzungen sind aber in der betrieblichen Praxis nicht immer erfüllt. Bei sommerlichen Temperaturen oder in sonnenbeschienenen Fahrzeugen kommt es — besonders in Verbindung mit hohem Druck und lange einwirkenden Erschütterungen — zu Verklebung und Verklumpung des Perlpolymerisats.

Es wurde nun gefunden, daß ein feuchtes Perlpolymerisat mit einer Glastemperatur von 30 bis 60 °C bei einem Wassergehalt von 5 bis 30, vorzugsweise von 10 bis 25 Gew.-%, unter den in der Praxis vorkommenden Transport- und Lagertemperaturen auch dann nicht verklebt, wenn es hohem Druck und langdauernden Erschütterungen ausgesetzt ist. Die Polymerisatperlen werden durch die Adhäsionskräfte, die von der dünnen Wasserschicht auf der Teilchenoberfläche ausgehen, zusammengehalten, lassen sich aber durch geringste mechanische Kräfte voneinander trennen. Beim Einrühren in Wasser verschwinden die Adhäsionskräfte sofort und die Teilchen verteilen sich ohne zusätzliche Zerkleinerungsmaßnahmen. Die Beschaffenheit des feuchten Perlpolymerisats hängt vom Wassergehalt, von der durchschnittlichen Perlgröße und möglicherweise von der Teilchengrößenverteilung ab. Ähnlich wie feuchter Sand ist das Perlpolymerisat bei niedrigem Wassergehalt noch etwas rieselfähig und wird bei steigendem Wassergehalt krümelig bis klumpig. Der Wassergehalt darf nicht bis zu einer brei- oder flüssigkeitsartigen Beschaffenheit gesteigert werden, selbst wenn ein solcher Zustand in einigen Fällen schon unterhalb der Grenze von 30 % Wassergehalt auftritt. Aus Gewichtsgründen wird der Wassergehalt nicht höher als nötig gewählt.

Die feuchten Perlpolymerisate können in einfachen Säcken aus Kunststoffolie gelagert und in Höhen von mehreren Metern gestapelt werden. Naturgemäß ist die Gefahr des Verklebens beim Lagern um so größer, je niedriger die Glastemperatur liegt. Dem kann durch einen verhältnismäßig hohen Wassergehalt, beschränkte Stapelhöhe und Schutz vor hohen Temperaturen Rechnung getragen werden. In jedem Fall ergibt sich jedoch eine verbesserte Lagerfähigkeit gegenüber dem trockenen Perlpolymerisat.

Erfindungsgemäß wird das feuchte Perlpolymerisat zu einer wäßrigen Suspension verarbeitet. Als Suspension wird in diesem Sinne jedes flüssige System bezeichnet, worin Wasser oder gegebenenfalls eine zum überwiegenden Teil aus Wasser bestehende Flüssigkeit eine zusammenhängende Phase bildet, in der die Polymerisatperlen einzeln suspendiert sind. Eine wäßrige Phase vom halben Gewicht des Polymerisats ist dafür bereits ausreichend. In der Regel ist das Gewicht der Wasserphase größer als das Gewicht des Polymerisats. Dem Gewichtsverhältnis der Perlpolymerisats zur wäßrigen Phase ist keine untere Grenze gesetzt.

In der Regel wird das Perlpolymerisat der wäßrigen Phase zugesetzt, jedoch kann, besonders bei der Herstellung konzentrierter Suspensionen, auch umgekehrt vorgegangen werden. Durch kurzes Umrühren wird eine gleichmäßige Verteilung erreicht und läßt sich nach dem Absetzen ebenso leicht wiederherstellen.

Die Zusammensetzung der Suspension richtet sich nach dem vorgesehenen Verwendungszweck. In der höchst konzentrierten Form, gegebenenfalls mit einem Zusatz einer wäßrigen Dispersion eines thermoplastischen Kunststoffes, kann die Suspension auf flächige Substrate aufgetragen und in der Wärme unter Druck mit einem anderen flächigen Substrat verklebt werden. Wenn man die aufgetragene Schicht freiliegend trocknet, erhält man eine heißsiegelbare Beschichtung. Um die gewünschte Streichfähigkeit der Suspension einzustellen oder das erforderliche Fließverhalten beim Heißklebevorgang zu erreichen, können die Suspensionen weitere Hilfsstoffe enthalten, z.B. wasserlösliche Verdickungsmittel, Faserstoffe und anorganische Füllstoffe. Auf diese Weise lassen sich die verschiedensten Werkstoffe untereinander oder mit anderen Werkstoffen verkleben. Als Beispiele für solche Werkstoffe seien Holz, Furniere, Holzspanplatten, Papier, Karton, Pappe Hartfaserpappe, kunststoffgetränkte Dekorpapiere, Kunststoff- und Metallfolien, Leder, Kunstleder, Gewebe und Faservliese genannt. Zum Verkleben von Metallblechen, Glas, keramischem Material, Prozellan, Kunststofftafeln oder -formkörpern sind haftverbessernde Zusätze oder mit stark polaren Gruppen modifizierte Perlpolymerisate vorteilhaft.

Die feuchten Perlpolymerisate können auch in wäßrige Faserstoffsuspensionen eingearbeitet werden, die zur Herstellung von Papieren, Pappe, Pappmaché oder Faservliesen verwendet werden. In diesem Falle kann der Kunststoffanteil an der Suspension in der Größenordnung von wenigen Prozenten liegen. Man kann auch zunächst eine höher konzentrierte Suspension des Perlpolymerisats herstellen und diese mit Textil- oder Cellulosefasern, Holzschliff, Sägespänen und dergleichen zu einer formbaren Masse verarbeiten.

In jedem Falle wird während oder nach der Formgebung unter Druck eine Heißbehandlung durchgeführt, um die Kunststoffperlen mit den faserigen oder körnigen Füllstoffen zu verbinden. Neben dem Perlpolymerisat können andere Bindemittel, z.B. Aminoplast- oder Phenolharze, verwendet werden. Für die Heißbehandlung eignen sich beispielsweise beheizte Pressen und Heißkalander.

Die Perlpolymerisate können durch die Wahl der zu ihrer Herstellung verwendeten Ausgangsstoffe in ihren Schmelz- und Klebeeigenschaften den Erfordernissen weitgehend angepaßt werden. Sie werden in an sich bekannter Weise aus radikalisch polymerisierbaren Monomeren, die in Gegenwart eines anorganischen Verteilungsmittels und/oder eines Schutzkolloids in Wasser zu Tröpfchen verteilt werden, durch das Verfahren der Perlpolymerisation erzeugt. Dabei erhält man 20- bis 50-%ige Perlsuspensionen, aus denen die Polymerisatperlen durch Filtrieren, Dekantieren oder Zentrifugieren abgetrennt werden können. Sie enthalten dann meistens noch etwa 5 bis 30 % Wasser (bezogen auf das Feuchtgewicht). Während es bisher üblich war, das feuchte Perlpolymerisat vor der weiteren Verwendung zu trocknen, wird es gemäß der Erfindung unmittelbar in der feuchten Form zur Herstellung von Suspensionen verwendet. Vorzugsweise wird der Wassergehalt auf 10 bis 25 Gew.-% eingestellt. In der Regel wird die von der Polymerisation herrührende Wasserphase durch Nachwaschen mit reinem Wasser ausgetauscht, jedoch kann es zweckmäßig sein, das bei der Polymerisation verwendete Verteilungsmittel nicht vollständig auszuwaschen, da es einen zusätzlichen Schutz gegen das Verkleben der Teilchen bewirkt. Sofern es bei der vorgesehenen Verwendung nicht stört, können der beim Polymerisat verbleibenden Wasserphase geringe Mengen an wasserlöslichen Polymerisaten zugesetzt werden, die die gegen Verklebung schützende Wirkung weiter verstärken.

Propylmethacrylat, Isobutyl- und sec. Butylmethacrylat, tert.- Butylacrylat und Vinylacetat ergeben bereits bei der Homopolymerisation Perlpolymerisate im beanspruchten Glastemperaturbereich von 30 bis 60 °C. In der Regel werden Monomere, die Homopolymerisate von höherer Glastemperatur ergeben, mit solchen, die als Homopolymerisat eine niedrigere Glastemperatur haben, in einem solchen Verhältnis gemischt, daß ein Mischpolymerisat der gewünschten Glastemperatur entsteht. Zu den Monomeren der ersten gruppe gehören Methyl- und Äthylmethacrylat und Styrol, sowie als modifizierende Monomere, die in begrenzten Mengen verwendet werden und der Verbesserung der Haftung und der Zähigkeit dienen, Acryl- und Methacrylsäure und Acryl- oder Methacrylnitril. Monomere der zweiten Gruppe sind z.B. die Ester der Acrylsäure, Methacrylsäurealkylester mit 3 oder mehr C-Atomen im Alkylrest, Vinylpropionat, -butyrat und Vinylester höherer Fettsäuren und Vinylidenchlorid. Zu dieser Gruppe gehören auch verschiedene Monomere, die wegen ihrer haftungsverbessernden Wirkung an Metallen, Glas und keramischen Oberflächen in beschränkten Mengen am Aufbau der Perlpolymerisate beteiligt sein können, nämlich Hydroxyalkylester und Dialkylaminoalkylester der Acryl- oder Methacrylsäure ; die Alkylreste haben darin in der Regel nicht mehr als vier Kohlenstoffatome. Monomere mit Hydroxyl-, Carboxyl- oder Aminogruppen bilden im allgemeinen höchstens 10 und vorzugsweise 0,5 bis 5 Gew.-% des Perlpolymerisats. Polymerisate bzw. Mischpolymerisate, die in reiner Form eine Glastemperatur über 60 °C haben, können durch Zusatz von Weichmachern, die mit dem Polymerisat verträglich sind, auf die gewünschte Glastemperatur eingestellt werden (vgl. Beispiel C).

Die Teilchengröße der verwendeten Perlpolymerisate kann im üblichen Bereich, d.h. zwischen etwa 0,05 und 2 mm liegen, wobei der Bereich von 0,1 bis 0,5 mm, jeweils als « zentrale Perlgröße » ermittelt, bevorzugt ist.

## Beispiele

### I. Herstellung der Perlpolymerisate

Die in der Tabelle aufgeführten Perlpolymerisate werden in einem 100-1-V4A-Kessel mit Impellerrührer und Wellenbrecher hergestellt. Die Beheizung erfolgt durch einen Heizmantel mit Wasserumlauf. Die Apparatur ist mit Temperaturfühler, Rückflußkühler und Einrichtungen für die Spülung mit Inertgas ausgerüstet ; die Rührgeschwindigkeit läßt sich über Getriebe variieren. Bei der Polymerisation von Monomeren, die bei der Polymerisationstemperatur gasförmig vorliegen (z.B. Vinylidenchlorid) wird der Kessel druckdicht verschlossen.

Die Polymerisation wird in folgender Weise durchgeführt :

Zur Erzeugung des Verteilers (Suspensionsstabilisators) wird Aluminiumsulfat in der vorgelegten Gesamtmenge an entionisiertem Wasser unter Rühren, Durchleiten von inertgas $N_2$ bzw. $CO_2$ und Aufheizen auf Polymerisationstemperatur (65 bis 80 °C) gelöst und durch Zusatz wäßriger Sodalösung bis zum Erreichen eines pH-Wertes von 5,5 als Aluminiumhydroxyd ausgefällt. Zur Verbesserung der Verteilerwirkung werden 5 %, berechnet auf $Al(OH)_3$, eines $C_{14}$ bis $_{16}$-Alkylsulfonats in Form des Natriumsalzes zugesetzt.

In diese Verteilersuspension wird die Monomerenphase, die den Initiator und gegebenenfalls Molekulargewichtsregler und sonstige Zusätze, wie Weichmacher usw., in gelöster Form enthält, eingebracht und durch die Scherwirkung der Rührers in Form feiner Tröpfchen dispergiert.

Die Drehzahl des Rührers ist in weiten Grenzen variierbar. Voraussetzung ist, daß durch das Rührsystem neben der Dispergierung des Monomeren zu Tröpfchen gewünschter Größe eine so starke Vertikalumwälzung des Kesselinhalts erfolgt, daß das durch Dichteunterschiede zwischen Wasser- und Monomerphase bedingte Aufrahmen bzw. Absinken der Monomertröpfchen verhindert wird.

Bei dem hier verwendeten Verhältnis zwischen Wasser- und Monomerenphase von 3 : 1 ergibt sich folgende Ansatzgröße : 45 kg Wasser, 15 kg Monomere.

Die Zusammensetzungen der hergestellten Perlpolymerisate sind in der Tabelle aufgeführt.

Während der Polymerisation wird die Temperatur der Umlaufheizung konstant gehalten. Die Innentemperatur steigt innerhalb 30 bis 120 Minuten um 10 bis 20 °C über die Anfangstemperatur an. Die erreichte Temperatur wird durch Regelung der Heizung etwa 2 Stunden konstant gehalten, danach wird der Ansatz auf etwa 25 °C abgekühlt und nach Auflösung des Verteilers durch Zusatz von Schwefelsäure auf einer Nutsche oder einem Dekanter von der Hauptmenge Wasser getrennt. Durch Nachwaschen mit entionisiertem Wasser werden die löslichen Polymerisationshilfsstoffe entfernt.

Der Anteil des im Perlpolymerisat verbleibenden Wassers läßt sich durch Variation der Absaug- bzw. Schleuderbedingungen variieren. Die Bestimmung des Wasseranteils erfolgt gravimetrisch.

Die mittlere Teilchengröße der Polymerisatperlen wird mikroskopisch bestimmt.

Zur Kennzeichnung der Molekülgröße ist in der Tabelle der bei 20 °C in Chloroform (Polymerisate A und C) bzw. in Nitromethan (Polymerisat B) gemessene $\eta_{sp}/C$-Wert (Makromolekulare Chemie, 7.S. 294, 1952) angegeben.

## Tabelle

| Perlpolymerisat | | Mengenver-hältnis (in Gew.-%) | Initiator (in Gew.-% bez. Mono-merengew.) | Regler (in Gew.-% bez. Mono-merengew.) | Verteiler (in Gew.-% bez. Mono-merengew.) | Perlgröße (Durch-messer) | Wasser-gehalt (in Gew.-% bez. Ge-samtgew.) | Red. Viskosi-tät $\eta_{sp}/C$ (ml/g) | $T_g$ (°C) |
|---|---|---|---|---|---|---|---|---|---|
| Bezeichn. | Monomerbe-standteile bzw. Weich-macher | | | | | | | | |
| A | EA - MMA | 50 : 50 | 0,5 % Lauroyl-peroxid | 0,2 % Dodecyl-mercaptan | 0,4 % $Al(OH)_3$ | 60 µm | 15 % | 123 | 55 |
| B | VDC - AN | 60 : 40 | 0,3 % Benzoyl-peroxid | — | 0,5 % $Al(OH)_3$ | 50 µm | 20 % | 135 | 60 |
| C | MMA - DBP | 70 : 30 | 0,2 % t-Butyl-perpivalat | 0,1 % Dodecyl-mercaptan | 0,8 % $Al(OH)_3$ | 30 µm | 28 % | 75 | 30 |

EA = Äthylacrylat
MMA = Methylmethacrylat
VDC = Vinylidenchlorid
AN = Acrylnitril
DBP = Dibutylphthalat

II. Herstellung und Anwendung von wäßrigen Polymerisatsuspensionen

## Beispiel 1

Eine wäßrige Beschichtungssuspension wird hergestellt durch Vermischen von

15 kg Wasser
32 kg feuchtes Perlpolymerisat A

35 kg wäßrige selbstvernetzende Kunststoffdispersion auf Basis Butylacrylat-Methylmethacrylat-Methylolmethacrylamid, $t_{\lambda max}$ = 2,5 °C nach DIN 53445

50 kg Harnstoff-Formaldehydharz (Kaurit 420, BASF AG)

0,2 kg Ammoniumchlorid

0,6 kg Wasser

Nach kurzem Rühren ist die Suspension gebrauchsfertig.

Ein saugfähiges Dekor-Rohpapier wird rückseitig mit der Suspension beschichtet. Das beschichtete Papier wird anschließend über einen Saugspalt geführt, wobei die Acrylharzdispersion und das Harnstoff-Formaldehydharz in das Papier eingesaugt werden, während das Perlpolymerisat auf der beschichteten Rückseite verbleit. Das Papier wird bei 130 °C bis auf eine Endfeuchtigkeit von 4-5 % getrocknet. Es ist bei 140 °C und 30-200 N/cm² Druck heißsiegelfähig.

## Beispiel 2

Im Holländer wird bei einer Stoffdichte von 1,3 % aus gebleichtem Nadelholz-Zellstoff und gebleichtem Laubholz-Zellstoff ein Stoff-Wasser-Gemisch vom Mahlgrad 35° SR erzeugt. Unter Rühren wird soviel vom feuchten Perlpolymerisat B zugefügt, daß bezogen auf Zellstoff, 25 % Perlpolymerisat vorhanden ist. Aus der erhaltenen Suspension wird in an sich bekannter Weise auf einer Langsiebpapiermaschine ein Papierblatt erzeugt und bei 100 °C getrocknet. Das Papier wird anschließend bedruckt und mit Lack auf SH-Basis beschichtet. Nach der Aushärtung des SH-Lackes ist das Papier in Hochdruckpressen auf Spanplatten verpreßbar.

## Beispiel 3

Eine Beschichtungssuspension wird unter Rühren hergestellt aus

40 kg Wasser

40 kg feuchtem Perlpolymerisat C

40 kg einer 60 %igen thermoplastischen Acrylharzdispersion, die Filme mit $t_{\lambda max}$ = 16 °C (nach DIN 53445).

Die Suspension wird in einer Menge von 30 g Feststoff/m² auf die Rückseite eines trockenen, kunststoffimprägnierten Papiers aufgetragen und die Beschichtung getrocknet. Man erhält eine bei 75-85 °C heißsiegelfähige Beschichtung.

## Anspruch

Verfahren zur Herstellung einer wäßrigen Suspension eines thermoplastischen Perlpolymerisats mit einer Glastemperatur von 30 bis 60 °C durch Suspendieren des Perlpolymerisats in einer wäßrigen Phase von mindestens dem halben Gewicht des Perlpolymerisats, dadurch gekennzeichnet, daß das Perlpolymerisat in Form eines feuchten Pulvers mit einem Gehalt von 5 bis 30, vorzugsweise 10 bis 25 Gew.-%, an Wasser, das sich in form einer dünnen Schicht auf der Teilchenoberfläche befindet, mit der wäßrigen Phase vermischt wird.

## Claim

Process for preparing an aqueous suspension of a thermoplastic bead polymer with a glass transition temperature of from 30 to 60 °C by suspending the bead polymer in an aqueous phase of at least half the weight of the bead polymer, characterised in that the bead polymer is mixed with the aqueous phase in the form of a moist powder containing from 5 to 30, preferably from 10 to 25 % by weight of water, this water taking the form of a thin coating over the surface of the particles.

## Revendication

Procédé pour la préparation d'une suspension aqueuse d'un produit thermoplastique de polymérisation en perles, ayant une température de vitrification de 30 à 60 °C, par la mise en suspension du polymère en perles dans une phase aqueuse ayant au moins la moitié du poids du polymère en perles, caractérisé en ce que le polymère en perles est mélangé à la phase aqueuse sous la forme d'une poudre humide ayant une teneur de 5 à 30, de préférence 10 à 25 % en poids d'eau qui se présente sous la forme d'une couche mince sur la surface des particules.